# EUROPEAN PATENT APPLICATION

(11) **EP 4 817 919 A1**
(43) Date of publication of application: **07.10.2026**
(21) Application number: 26166894.1
(22) Date of filing: 23.03.2026
(51) Int. Cl.: B60K 1/04

(54) **VEHICLE LOWER PORTION STRUCTURE**

(30) Priority: 26.03.2025 JP 2025052326
(71) Applicant: Toyota Jidosha Kabushiki Kaisha, Toyota-shi, Aichi-ken 471-8571 (JP)
(72) Inventor: KAMINAGA, Takuki, TOYOTA-SHI, AICHI-KEN, 471-8571 (JP); HAYASHI, Yosuke, KARIYA, AICHI-KEN, 448-8650 (JP)
(74) Representative: Cabinet Beau de Loménie

(57) **Abstract**

A vehicle lower portion structure includes: a battery module (30) that includes plural of battery cells (32) arranged in a predetermined direction and a heat insulating material (36) provided between adjacent battery cells (32), the battery module (30) being disposed at a lower portion of a vehicle (10); and a cover board (60) that includes a protrusion (62) protruding from a lower surface (60L) of the cover board (60), and that is joined to an upper surface (30U) of the battery module (30), via an adhesive layer (70), in a state in which the protrusion (62) is supported by the heat insulating material (36).

## Description

### BACKGROUND

### Technical Field

The present disclosure relates to a vehicle lower portion structure.

### Related Art

A battery mounting structure in which a battery case, which houses a battery module (battery stack), is mounted to a lower side of a floor panel is known (see, for example, Japanese Patent Application Laid-Open (JP-A) No. 2018-202946). In this battery mounting structure, an upper cover portion of the battery case which covers the upper surface of the battery module serves as the floor panel.

Incidentally, in order to protect the battery module, a cover board may be disposed between the battery module and the upper cover portion, and the upper surface of the battery module and the lower surface of the cover board may be adhered to each other via an adhesive layer.

However, when adhering together the upper surface of the battery module and the lower surface of the cover board via the adhesive layer, it is difficult to manage the layer thickness of the adhesive layer, and if a part is generated in which the layer thickness of the adhesive layer is thinner than the set thickness, there is a possibility that the adhesive strength will be insufficient at that part.

### SUMMARY

The present disclosure provides a vehicle lower portion structure in which an upper surface of a battery module and a lower surface of a cover board can be adhered to each other via an adhesive layer having a predetermined layer thickness.

A vehicle lower portion structure according to a first aspect includes: a battery module that includes plural battery cells arranged in a predetermined direction and a heat insulating material provided between adjacent battery cells, the battery module being disposed at a lower portion of a vehicle; and a cover board that includes a protrusion protruding from a lower surface of the cover board, and that is joined to an upper surface of the battery module, via an adhesive layer, in a state in which the protrusion is supported by the heat insulating material.

According to the vehicle lower portion structure of the first aspect, a battery module is disposed at a lower portion of a vehicle. The battery module includes plural battery cells and a heat insulating material. The plural battery cells are arranged in a predetermined direction. Furthermore, the heat insulating material is provided between adjacent battery cells.

The cover board includes a protrusion. The protrusion protrudes from a lower surface of the cover board. The cover board is joined to an upper surface of the battery module, via an adhesive layer, in a state in which the protrusion is supported by the heat insulating material of the battery module.

Here, when adhering the upper surface of the battery module and the lower surface of the cover board to each other via the adhesive layer, by supporting the protrusion of the cover board with the heat insulating material between adjacent battery cells, a predetermined gap is formed between the upper surface of the battery module and the lower surface of the cover board. Due to this gap, the adhesive layer, which adheres the upper surface of the battery module and the lower surface of the cover board to each other, can have a predetermined layer thickness.

Therefore, in the present aspect, the upper surface of the battery module and the lower surface of the cover board can be adhered to each other via the adhesive layer having a predetermined layer thickness.

A vehicle lower portion structure according to a second aspect is the vehicle lower portion structure according to the first aspect, wherein: the heat insulating material is formed in a sheet shape and is interposed between adjacent battery cells; and the protrusion is a rib along the heat insulating material.

According to the vehicle lower portion structure of the second aspect, the heat insulating material is formed in a sheet shape and is interposed between adjacent battery cells. Further, the protrusion is a rib along the sheet-shaped heat insulating material.

As a result, when the upper surface of the battery module and the lower surface of the cover board are adhered to each other via the adhesive layer, the rib is supported by the heat insulating material, whereby a predetermined gap is formed between the upper surface of the battery module and the lower surface of the cover board over the entire length of the rib.

Therefore, the adhesive layer, which adheres the upper surface of the battery module and the lower surface of the cover board to each other, can have a predetermined layer thickness over the entire length of the rib.

A vehicle lower portion structure according to a third aspect is the vehicle lower portion structure according to the second aspect, wherein: the battery module includes plural heat insulating materials disposed at both sides of the adhesive layer; and the cover board includes plural ribs that are respectively supported by the heat insulating materials at both sides of the adhesive layer.

According to the vehicle lower portion structure of the third aspect, the battery module includes plural heat insulating materials disposed at both sides of the adhesive layer. Furthermore, the cover board includes plural ribs respectively supported by the heat insulating materials at both sides of the adhesive layer.

As a result, when adhering the upper surface of the battery module and the lower surface of the cover board to each other via the adhesive layer, the flow of the adhesive layer before curing is limited by the ribs arranged at both sides of the adhesive layer. Therefore, for example, leakage of the adhesive layer before curing from between the upper surface of the battery module and the lower surface of the cover board can be suppressed.

A vehicle lower portion structure according to a fourth aspect is the vehicle lower portion structure according to any one of the first aspect to the third aspect, wherein: the vehicle lower portion structure further includes a battery case that includes an upper cover portion covering the cover board and that houses the battery module and the cover board; and at least part of the upper cover portion forms a floor of a vehicle cabin.

According to the vehicle lower portion structure of the fourth aspect, a battery case is provided. The battery case houses the battery module and the cover board. The battery case includes an upper cover portion that covers the cover board. At least part of the upper cover portion forms the floor of the vehicle cabin.

As a result, in the present aspect, the number of components can be reduced as compared to a case in which the floor of the vehicle cabin is formed by a floor panel different from the upper cover portion.

On the other hand, in a case in which the floor of the vehicle cabin is formed by the upper cover portion, since the weight of an occupant and the like is transmitted locally as a vertical load to the upper surface of the battery module via the upper cover portion, the battery module is likely to be damaged or the like.

In this regard, in the present aspect, the vertical load exerted on the upper cover portion is transmitted to the heat insulating material via the protrusion of the cover board, and is also distributed and transmitted to the upper surface of the battery module via the cover board and the adhesive layer. Therefore, damage or the like to the battery module can be suppressed.

A vehicle lower portion structure according to a fifth aspect is the vehicle lower portion structure according to the fourth aspect, wherein: a lower surface of the upper cover portion is adhered to an upper surface of the cover board.

According to the vehicle lower portion structure of the fifth aspect, a lower surface of the upper cover portion is adhered to an upper surface of the cover board. In other words, the upper surface of the battery module is adhered to the lower surface of the upper cover portion via the cover board.

Here, for example, when a collision object collides with a vehicle at which a battery case is installed, at the interior of the battery case, there is a possibility that a battery module moves relative to a collision object side due to the inertial force, and that the collision object interferes with the battery module.

In this regard, in the present aspect, as described above, the upper surface of the battery module is adhered to the lower surface of the upper cover portion via the cover board. As a result, when a collision object collides with the vehicle at which the battery case is installed, the upper cover portion, the cover board, and the battery module are likely to integrally move to the side opposite to the collision object. Therefore, interference of the collision object with respect to the battery module can be suppressed.

According to the present disclosure, as an example, the upper surface of the battery module and the lower surface of the cover board can be adhered to each other via an adhesive layer having a predetermined layer thickness.

### BRIEF DESCRIPTION OF THE DRAWINGS

An exemplary embodiment of the present disclosure will be described in detail based on the following figures, wherein:
Fig. 1 is a cross-sectional view of a vehicle to which a vehicle lower portion structure according to an exemplary embodiment has been applied, as viewed from a vehicle width direction;
Fig. 2 is a plan view of the battery module illustrated in Fig. 1;
Fig. 3 is a cross-sectional view taken along line 3-3 in Fig. 2; and
Fig. 4 is an exploded cross-sectional view corresponding to Fig. 3, in which the battery module, an upper cover, and a cover board are disassembled.

### DETAILED DESCRIPTION

Explanation follows regarding an exemplary embodiment with reference to the drawings. Note that in each of the drawings, as appropriate, the arrow FR indicates the front side of a vehicle (the front side in a vehicle front-rear direction), and the arrow UP indicates the upper side of the vehicle (the upper side in a vehicle up-down direction). Furthermore, the arrow OUT indicates an outer side in a vehicle width direction. Furthermore, in the following explanation, in cases in which front and rear, up and down, and left and right are described, these indicate front and rear in the vehicle front-rear direction, up and down in the vehicle up-down direction, and left and right in the vehicle width direction, respectively, unless otherwise specified.

### Vehicle

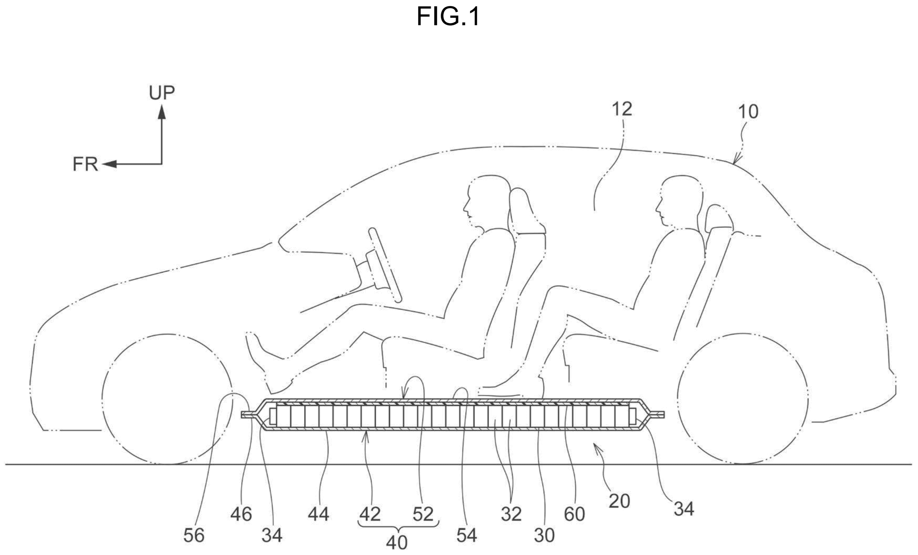

Fig. 1 illustrates a vehicle 10 to which a vehicle lower portion structure according to the present exemplary embodiment has been applied. The vehicle 10 is, for example, an electric vehicle using an electric motor, which is not illustrated in the drawings, as a drive source, or a hybrid vehicle using an electric motor and an internal combustion engine as a drive source.

### Battery

A battery (battery pack) 20 is installed at a lower portion of the vehicle 10. The battery 20 is disposed extending over a pair of rockers that are not illustrated in the drawings and that are respectively disposed at both sides, in the vehicle width direction, of the vehicle 10. The battery 20 includes plural battery modules 30, a battery case 40, and plural cover boards 60.

### Battery Module

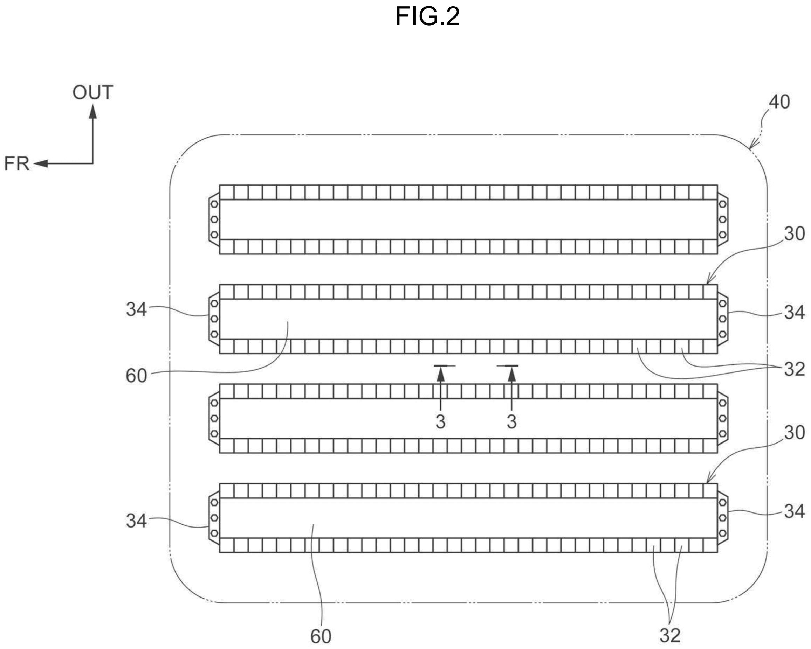

As illustrated in Fig. 2, the plural battery modules (battery stacks) 30 are disposed with a longitudinal direction in the vehicle front-rear direction and are arranged in the vehicle width direction. Both end portions, in the longitudinal direction, of each battery module 30 are affixed to a lower cover 42 (see Fig. 1) of the battery case 40, which is described below, via end plates 34.

Each battery module 30 includes plural battery cells 32 and plural heat insulating materials 36. The plural battery cells 32 are storage batteries (secondary batteries) that store electric power to be supplied to the above-described electric motor and the like. The battery cells 32 are arranged in the longitudinal direction of the battery module 30.

Each battery cell 32 is formed in a flat rectangular parallelepiped shape. Furthermore, each battery cell 32 is disposed with a longitudinal direction in the vehicle width direction and a thickness direction in the vehicle front-rear direction. The battery cells 32 are electrically connected in series in a state of being laminated in the longitudinal direction of the battery module 30.

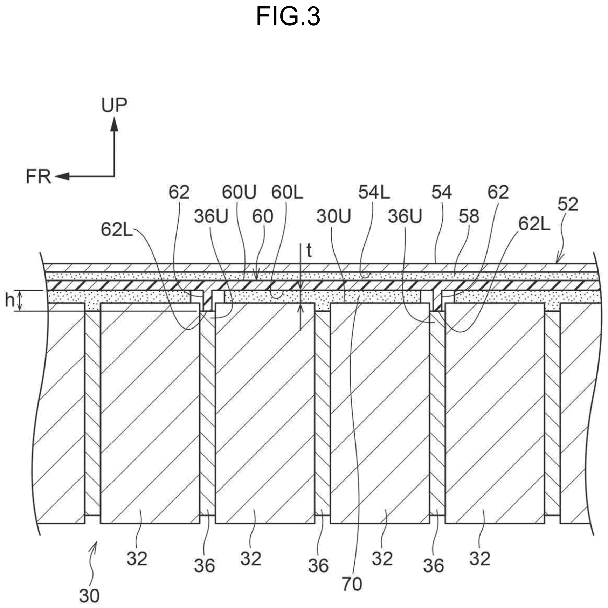

As illustrated in Fig. 3, a heat insulating material 36 is provided between adjacent battery cells 32. By insulating adjacent battery cells 32 with the heat insulating material 36, for example, in a case in which the temperature of one adjacent battery cell 32 becomes high, the influence of heat on another adjacent battery cell 32 is reduced.

The heat insulating material 36 is formed in a sheet shape by, for example, rock wool, glass wool, or a foam material. Furthermore, the heat insulating material 36 is interposed between the side surfaces of adjacent battery cells 32. Specifically, the heat insulating material 36 is held in a state of being sandwiched by the side surfaces of adjacent battery cells 32. The heat insulating material 36 is disposed along the longitudinal direction of the battery cell 32 and is disposed from a lower end side to an upper end side of the battery cell 32.

Note that a cover board 60, which is described below, is adhered to an upper surface 30U of the battery module 30. Furthermore, the upper surface 30U of the battery module 30 is a concept including an upper surface of the battery cell 32 and an upper surface of the heat insulating material 36.

### Battery Case

As illustrated in Fig. 1, the plural battery modules 30 are housed in the battery case 40. The battery case 40 is formed, as a whole, in a flat box shape and is disposed at a lower side of a battery frame that is not illustrated in the drawings. The battery case 40 includes the lower cover 42 and an upper cover 52, which are divided in the vehicle up-down direction.

The lower cover 42 is formed of a metal plate such as a steel plate. Furthermore, the lower cover 42 is formed in a box shape having an open upper side, and configures a lower portion of the battery case 40. A lower wall portion (bottom wall portion) of the lower cover 42 serves as a lower cover portion 44 that covers the lower surfaces of the plural battery modules 30 from a lower side.

The lower cover portion 44 is formed in a plate shape, and is disposed with a thickness direction in the vehicle up-down direction. Furthermore, a flange portion 46, which protrudes outward, is provided at an end portion of the lower cover 42 at the opening side. The upper cover 52 is disposed at the upper side of the lower cover 42.

The upper cover 52 is formed of a metal plate such as a steel plate. Furthermore, the upper cover 52 is formed in a box shape with an open lower side, and configures an upper portion of the battery case 40. An upper wall portion (top wall portion) of the upper cover 52 serves as an upper cover portion 54 that covers the upper surfaces 30U of the plural battery modules 30 from an upper side. The upper cover portion 54 is formed in a plate shape, and is disposed with a thickness direction in the vehicle up-down direction.

A flange portion 56, which protrudes outward, is provided at an end portion of the upper cover 52 at the opening side. The flange portion 56 of the upper cover 52 and the flange portion 46 of the lower cover 42 are joined by bolts and nuts or the like, which are not illustrated in the drawings, in a state of being superposed in the vehicle up-down direction.

The upper cover portion 54 forms a floor of a vehicle cabin 12. In other words, the upper cover portion 54 also serves as a floor panel that forms the floor of the vehicle cabin 12. At an upper surface of the upper cover portion 54, for example, a seat cross member that is not illustrated in the drawings and that extends in the vehicle width direction, and a cross member that is not illustrated in the drawings and that configures the battery frame, are disposed.

Note that part of the floor of the vehicle cabin 12 may be formed by part of the upper cover portion 54. In other words, the floor of the vehicle cabin 12 may be formed by at least part of the upper cover portion 54. Furthermore, the floor of the vehicle cabin 12 may be formed by, for example, the upper cover portion 54 and the floor panel.

### Cover Board

As illustrated in Fig. 2, plural cover boards 60 are housed in the battery case 40. The cover board 60 is a protecting member that protects the upper surface 30U of the battery module 30. Furthermore, the cover board 60 also functions as a load distribution member (surface pressure distribution member) that is interposed between the upper cover portion 54 (see Fig. 3) and the battery module 30, thereby distributing and transmitting a vertical load from the upper cover portion 54 to the upper surface 30U of the battery module 30.

The plural cover boards 60 are made, for example, of resin (resin board), and are disposed with a thickness direction in the vehicle up-down direction. Furthermore, the plural cover boards 60 are formed in a rectangular shape having a longitudinal direction in the vehicle front-rear direction. The cover boards 60 are disposed at intervals in the vehicle width direction so as to be positioned on the upper surfaces 30U of the plural battery modules 30. Furthermore, each cover board 60 extends from one end side to another end side, in the longitudinal direction, of the battery module 30.

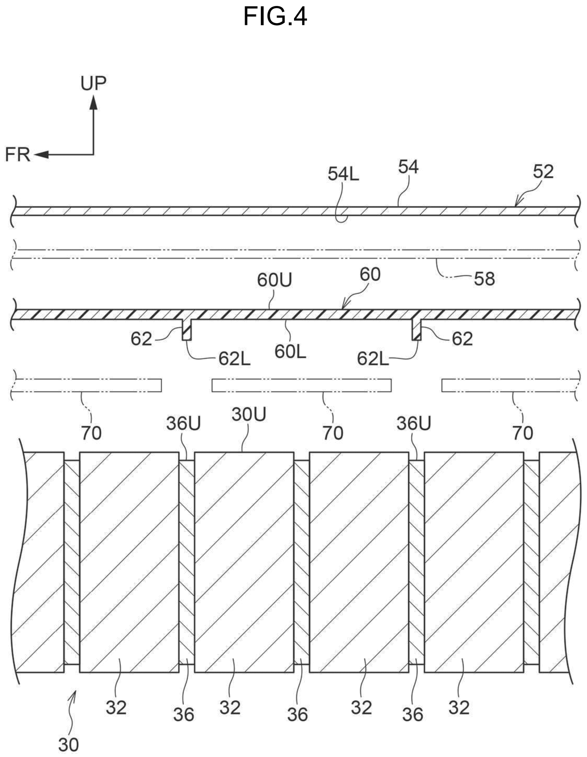

As illustrated in Fig. 3 and Fig. 4, an upper surface 60U of the cover board 60 is adhered to a lower surface 54L of the upper cover portion 54. Specifically, the upper surface 60U of the cover board 60 and the lower surface 54L of the upper cover portion 54 are adhered to each other via an adhesive layer 58. The adhesive layer 58 is formed, for example, of a cured silicon-based adhesive. Note that the material of the adhesive layer 58 can be appropriately changed.

A lower surface 60L of the cover board 60 is adhered to the upper surface 30U of the battery module 30. Specifically, the lower surface 60L of the cover board 60 and the upper surface 30U of the battery module 30 are adhered to each other via plural adhesive layers 70. The adhesive layer 70 is formed, for example, of a cured urethane-based adhesive. Note that the material of the adhesive layer 70 can be appropriately changed.

Here, the upper surface 30U of the battery module 30 is formed by the upper surfaces of the plural battery cells 32 that are arranged in the longitudinal direction of the battery module 30. There is a possibility that there is a height difference between the upper surfaces of the plural battery cells 32 due to manufacturing errors of the battery cells 32 or the like.

In this regard, in the present embodiment, by adhering the lower surface 60L of the cover board 60 and the upper surface 30U of the battery module 30 to each other via the adhesive layers 70, a height difference between the upper surfaces of the plural battery cells 32 is absorbed. As a result, the lower surface 60L of the cover board 60 and the upper surface 30U of the battery module 30 are adhered to each other with a predetermined adhesive strength.

### Rib

Plural ribs 62 are provided at the lower surface 60L of the cover board 60. The plural ribs 62 function as spacers that ensure a predetermined gap (a gap corresponding to a predetermined layer thickness t shown in Fig. 3) between the upper surface 30U of the battery module 30 and the lower surface 60L of the cover board 60 when adhering the upper surface 30U of the battery module 30 and the lower surface 60L of the cover board 60 to each other. Note that the rib 62 is an example of a protrusion.

As an example, the plural ribs 62 are integrally formed with the cover board 60 by resin. Furthermore, the plural ribs 62 extend in a width direction of the cover board 60 (the vehicle width direction), and extend from one end side to another end side, in the width direction, of the cover board 60. Furthermore, the plural ribs 62 are arranged at intervals in the longitudinal direction of the cover board 60 (the vehicle front-rear direction).

The plural ribs 62 protrude downward from the lower surface 60L of the cover board 60. The cross-sectional shape of each rib 62 is rectangular. Furthermore, a lower surface 62L of each rib 62 is a substantially horizontal flat surface.

Here, as illustrated in Fig. 3, the plural ribs 62 are supported by the plural heat insulating materials 36 configuring the battery module 30. Specifically, the plural ribs 62 are arranged at intervals in the longitudinal direction of the cover board 60 in accordance with the positions of the plural heat insulating materials 36. The lower surfaces 62L of the ribs 62 are supported in a state of surface contact with upper end portions 36U of the plural heat insulating materials 36, respectively. As a result, a predetermined gap is formed between the upper surface 30U of the battery module 30 and the lower surface 60L of the cover board 60.

The height (protrusion amount) h of each rib 62 that protrudes from the lower surface 60L of the cover board 60 is set in accordance with the design value of a predetermined layer thickness t of the adhesive layer 70. Furthermore, the ribs 62 are arranged at both sides of the adhesive layer 70. In other words, an adhesive layer 70 is provided between adjacent ribs 62. As a result, in a state in which the lower surfaces 62L of the plural ribs 62 are respectively supported by the upper end portions 36U of the plural heat insulating materials 36, an adhesive layer 70, which has a predetermined layer thickness t corresponding to the height h of the ribs 62, is formed between adjacent ribs 62.

### Adhesion between the Battery Module and the Cover Board

Next, explanation follows regarding an example of a method of adhering the battery module 30 and the cover board 60 to each other.

When adhering the upper surface 30U of the battery module 30 and the lower surface 60L of the cover board 60 to each other via the adhesive layer 70, for example, an adhesive having a thickness exceeding the height h of the ribs 62 of the cover board 60 (see Fig. 3) is applied to a predetermined part of the upper surface 30U of the battery module 30.

In this state, the lower surface 60L of the cover board 60 is placed on the upper surface 30U of the battery module 30 via the adhesive, and the adhesive is spread out between the upper surface 30U of the battery module 30 and the lower surface 60L of the cover board 60.

At this time, the adhesive applied to the upper surface 30U of the battery module 30 is positioned between adjacent ribs 62. Furthermore, adjacent ribs 62 are arranged along the heat insulating materials 36 disposed at both sides of the adhesive, and the upper end portions 36U of the heat insulating materials 36 support the lower surfaces 62L of the adjacent ribs 62.

As a result, as illustrated in Fig. 3, the adhesive layer 70 having a predetermined layer thickness t corresponding to the height h of the ribs 62 is formed between the upper surface 30U of the battery module 30 and the lower surface 60L of the cover board 60.

Note that the method of adhering the upper surface 30U of the battery module 30 and the lower surface 60L of the cover board 60 to each other is not limited to the above, and can be appropriately changed.

### Operation

Next, explanation follows regarding the operation of the present exemplary embodiment.

As illustrated in Fig. 1 and Fig. 2, according to the vehicle lower portion structure of the present exemplary embodiment, the plural battery modules 30 are disposed at the lower portion of the vehicle 10.

As illustrated in Fig. 3, each battery module 30 includes plural battery cells 32 and plural heat insulating materials 36. The plural battery cells 32 are arranged in the vehicle front-rear direction. Furthermore, heat insulating materials 36 are provided between adjacent battery cells 32, respectively.

The cover board 60 includes plural ribs 62. The plural ribs 62 protrude from the lower surface 60L of the cover board 60. The cover board 60 is joined to the upper surface 30U of the battery module 30 via the adhesive layer 70 in a state in which the plural ribs 62 are respectively supported by the plural heat insulating materials 36 of the battery module 30.

Here, when adhering the upper surface 30U of the battery module 30 and the lower surface 60L of the cover board 60 to each other via the adhesive layer 70, by supporting the ribs 62 of the cover board 60 by the heat insulating materials 36 between adjacent battery cells 32, the predetermined gap is formed between the upper surface 30U of the battery module 30 and the lower surface 60L of the cover board 60. By this gap, the adhesive layer 70, which adheres the upper surface 30U of the battery module 30 and the lower surface 60L of the cover board 60 to each other, can be set to the predetermined layer thickness t.

Therefore, in the present exemplary embodiment, the upper surface 30U of the battery module 30 and the lower surface 60L of the cover board 60 can be adhered to each other via the adhesive layer 70 having a predetermined layer thickness t.

Furthermore, in the present exemplary embodiment, damage and the like to the upper surfaces of the battery cells 32 can be suppressed as compared to a case in which the ribs 62 of the cover board 60 are supported by the upper surfaces of the battery cells 32.

Furthermore, the plural heat insulating materials 36 are formed in a sheet shape and interposed between adjacent battery cells 32. Along the heat insulating materials 36, the plural ribs 62 of the cover board 60 are respectively arranged.

As a result, when the upper surface 30U of the battery module 30 and the lower surface 60L of the cover board 60 are adhered to each other via the adhesive layer 70, by supporting the ribs 62 with the heat insulating materials 36, the predetermined gap is formed between the upper surface 30U of the battery module 30 and the lower surface 60L of the cover board 60 over the entire length of the ribs 62.

Therefore, the adhesive layer 70, which adheres the upper surface 30U of the battery module 30 and the lower surface 60L of the cover board 60 to each other, can have the predetermined layer thickness t over the entire length of the ribs 62.

Furthermore, at both sides of the adhesive layer 70, adjacent ribs 62 are respectively supported by the heat insulating materials 36. As a result, when adhering the upper surface 30U of the battery module 30 and the lower surface 60L of the cover board 60 to each other via the adhesive layer 70, the flow of the adhesive layer 70 before curing is limited by the ribs 62 arranged at both sides of the adhesive layer 70.

Therefore, for example, leakage of the adhesive layer 70 before curing from between the upper surface 30U of the battery module 30 and the lower surface 60L of the cover board 60 can be suppressed.

Furthermore, as illustrated in Fig. 1, the battery module 30 and the cover board 60 are housed in the battery case 40. The battery case 40 includes the upper cover 52 and the lower cover 42 which are assembled in the vehicle up-down direction.

The upper cover 52 of the battery case 40 includes the upper cover portion 54 that covers the plural cover boards 60. The upper cover portion 54 forms the floor of the vehicle cabin 12.

As a result, in the present exemplary embodiment, the number of components can be reduced as compared to a case in which the floor of the vehicle cabin 12 is formed by a floor panel different from the upper cover portion 54.

On the other hand, in a case in which the floor of the vehicle cabin 12 is formed by the upper cover portion 54, since the weight of an occupant and the like is transmitted locally as a vertical load to the upper surface 30U of the battery module 30 via the upper cover portion 54, the battery module 30 is likely to be damaged or the like.

In this regard, in the present exemplary embodiment, the vertical load exerted on the upper cover portion 54 is transmitted to the heat insulating materials 36 via the ribs 62 of the cover board 60, and is also distributed and transmitted to the upper surface 30U of the battery module 30 via the cover board 60 and the adhesive layer 70. Therefore, damage or the like to the battery module 30 can be suppressed.

Furthermore, the lower surface 54L of the upper cover portion 54 is adhered to the upper surface 60U of the cover board 60. In other words, the upper surface 30U of the battery module 30 is adhered to the lower surface 54L of the upper cover portion 54 via the cover board 60.

Here, for example, when a collision object collides with the vehicle 10 at which the battery case 40 is installed, at the interior of the battery case 40, there is a possibility that the battery module 30 moves relative to a collision object side due to the inertial force, and that the collision object interferes with the battery module 30.

In this regard, in the present exemplary embodiment, as described above, the upper surface 30U of the battery module 30 is adhered to the lower surface 54L of the upper cover portion 54 via the cover board 60. As a result, when the collision object collides with the vehicle 10 at which the battery case 40 is installed, the upper cover portion 54, the cover board 60, and the battery module 30 are likely to integrally move to the side opposite to the collision object. Therefore, interference of the collision object with respect to the battery module 30 can be suppressed.

Furthermore, the plural battery cells 32 are arranged in the longitudinal direction of the battery module 30, that is, in the vehicle front-rear direction. As a result, in the present exemplary embodiment, the number of battery cells 32 that can be arranged in a row can be increased as compared to a case in which the plural battery cells 32 are arranged in the vehicle width direction.

Furthermore, the upper cover 52 is made of metal. As a result, the strength of the upper cover portion 54 can be ensured while reducing the thickness of the upper cover portion 54 that configures the upper cover 52.

On the other hand, the cover board 60 is made of resin. As a result, the ribs 62 can easily be formed on the lower surface 60L of the cover board 60 while reducing the weight of the cover board 60.

Furthermore, by making the cover board 60 of resin, adhesion between the cover board 60 and the battery module 30 and the upper cover portion 54 can be improved.

Furthermore, by interposing the resin cover board 60 between the battery module 30 and the upper cover portion 54, the upper cover 52, which forms the floor of the vehicle cabin 12, and the battery module 30, can be insulated.

### Modified Example

Next, explanation follows regarding a modified example of the above-described exemplary embodiment.

In the above-described exemplary embodiment, the ribs 62 are directly supported by the heat insulating materials 36. However, between the ribs 62 and the heat insulating materials 36, for example, a spacer, which adjusts the gap between the upper surface 30U of the battery module 30 and the lower surface 60L of the cover board 60, may be interposed. In other words, in the above-described exemplary embodiment, supporting the ribs 62 (protrusions) with the heat insulating materials 36 is a concept including not only a configuration in which the ribs 62 are directly supported by the heat insulating materials 36, but also a configuration in which the ribs 62 are indirectly supported via a spacer.

Furthermore, in the above-described exemplary embodiment, the ribs 62 of the cover board 60 are arranged at both sides of the adhesive layer 70, respectively. However, the ribs 62 of the cover board 60 are not limited to both sides of the adhesive layer 70, and may be arranged at one side of the adhesive layer 70.

Furthermore, in the above-described exemplary embodiment, the protrusions that protrudes from the lower surface 60L of the cover board 60 are the ribs 62. However, the protrusions are not limited to the ribs 62. The protrusions may be any protrusion that can ensure the predetermined gap between the upper surface 30U of the battery module 30 and the lower surface 60L of the cover board 60, and may be, for example, protrusions scattered on the lower surface 60L of the cover board 60.

Furthermore, in the above-described exemplary embodiment, the upper surface 60U of the cover board 60 is adhered to the lower surface 54L of the upper cover portion 54. However, the upper surface 60U of the cover board 60 may not be adhered to the lower surface 54L of the upper cover portion 54.

Furthermore, in the above-described exemplary embodiment, plural ribs 62 are provided at the lower surface 60L of the cover board 60. However, at least one rib 62 may be provided at the lower surface 60L of the cover board 60.

Furthermore, in the above-described exemplary embodiment, the cover board 60 is made of resin. However, the cover board 60 is not limited to being made of resin, and may be made of, for example, a metal.

Furthermore, in the above-described exemplary embodiment, the upper cover portion 54 of the upper cover 52 forms the floor of the vehicle cabin 12. However, the floor of the vehicle cabin 12 is not limited to the upper cover portion 54, and may be formed by a floor panel provided on the upper cover portion 54.

Furthermore, in the above-described exemplary embodiment, the upper cover 52 is formed in a box shape having an open lower side. However, the upper cover 52 is not limited to a box shape having an open lower side, and may be formed in a flat plate shape, for example.

Furthermore, in the above-described exemplary embodiment, the battery module 30 is disposed with the longitudinal direction in the vehicle front-rear direction. However, the battery module 30 may be disposed with the longitudinal direction in the vehicle width direction. In this case, the plural battery cells 32 configuring the battery module 30 are arranged in the vehicle width direction.

Furthermore, in the above-described exemplary embodiment, the plural battery modules 30 are housed in the battery case 40. However, the battery case 40 can house at least one battery module 30.

Furthermore, in the above-described exemplary embodiment, the battery modules 30 are housed in the battery case 40. However, the battery case 40 can be appropriately omitted.

Although explanation has been given regarding an exemplary embodiment of the present disclosure, the present disclosure is not limited to such embodiments, and obviously the exemplary embodiment and various modifications may be appropriately combined and used, and various embodiments may be implemented within a range not departing from the gist of the present disclosure.

## Claims

1. A vehicle lower portion structure, comprising:
a battery module (30) that comprises a plurality of battery cells (32) arranged in a predetermined direction and a heat insulating material (36) provided between adjacent battery cells (32), the battery module (30) being disposed at a lower portion of a vehicle (10); and
a cover board (60) that comprises a protrusion (62) protruding from a lower surface (60L) of the cover board (60), and that is joined to an upper surface (30U) of the battery module (30), via an adhesive layer (70), in a state in which the protrusion (62) is supported by the heat insulating material (36).

2. The vehicle lower portion structure according to claim 1, wherein:
the heat insulating material (36) is formed in a sheet shape and is interposed between adjacent battery cells (32); and
the protrusion (62) is a rib along the heat insulating material (36).

3. The vehicle lower portion structure according to claim 2, wherein:
the battery module (30) comprises a plurality of heat insulating materials (36) disposed at both sides of the adhesive layer (70); and
the cover board (60) comprises a plurality of ribs (62) that are respectively supported by the heat insulating materials (36) at both sides of the adhesive layer (70).

4. The vehicle lower portion structure according to any one of claim 1 to claim 3, wherein:
the vehicle lower portion structure further comprises a battery case (40) that includes an upper cover portion (54) covering the cover board (60) and that houses the battery module (30) and the cover board (60); and
at least part of the upper cover portion (54) forms a floor of a vehicle cabin (12).

5. The vehicle lower portion structure according to claim 4, wherein a lower surface (54L) of the upper cover portion (54) is adhered to an upper surface (60U) of the cover board (60).
